# EUROPEAN PATENT APPLICATION

(11) **EP 1 316 457 A1**
(43) Date of publication of application: **04.06.2003**
(21) Application number: 01000685.6
(22) Date of filing: 30.11.2001
(51) Int. Cl.: B60K 6/04, B60K 41/00

(54) **Method and arrangement for controlling the take-off in a hybrid electric vehicle**

(71) Applicant: Ford Global Technologies, Inc., Dearborn, Michigan 48126 (US)
(72) Inventor: Lennevi, Jerker, S-44351, Lerum (SE)
(74) Representative: Messulam, Alec Moses

(57) **Abstract**

A method for minimising driver perceptible drive train disturbances during take-off in a hybrid electric vehicle 10 is disclosed.

The method includes sensing an actual state-of-charge value of a battery 410 in a hybrid electric vehicle 10 and a travelling velocity of the vehicle 10 during take-off operation. The sensed actual state of charge value is compared with a state of charge reference value and computing a delta state of charge value as a difference therebetween. A velocity-based state of charge calibration factor is looked up that corresponds to the travelling velocity of the vehicle 10. A combination of the delta state of charge value and the state of charge calibration factor is utilised as a state of charge feedback engine speed control instruction to an engine controller 220 of the hybrid electric vehicle 10.

## Description

The present invention relates to hybrid electric vehicles and in particular to the control of such vehicle during take-off.

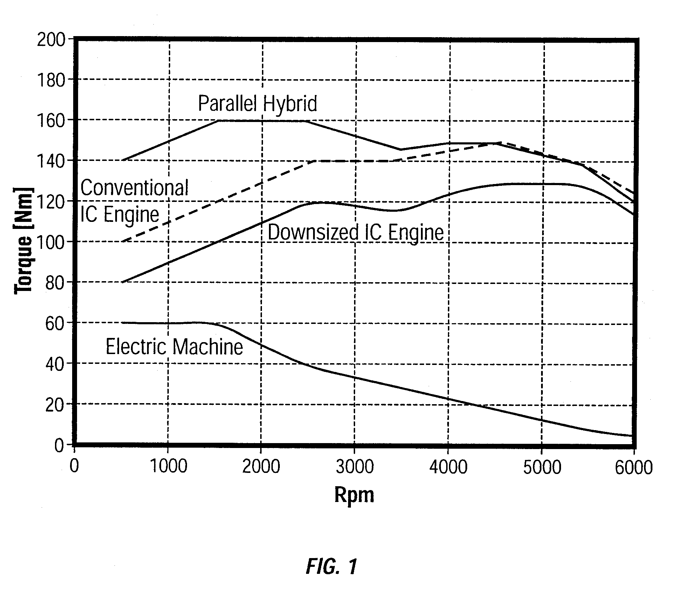

Generally, a hybrid electric vehicle combines electric propulsion with traditional internal combustion engine propulsion to achieve enhanced fuel economy and/or lower exhaust emissions. Electric propulsion has typically been generated through the use of batteries and electric motors. Such an electric propulsion system provides the desirable characteristics of high torque at low speeds, high efficiency, and the opportunity to capture otherwise lost braking energy. Propulsion from an internal combustion engine provides high energy density, and enjoys an existing infrastructure and lower costs due to economies of scale. By combining the two propulsive systems with a proper control strategy, the result is a reduction in the use of each device in its less efficient range. Furthermore, and as shown in Figure 1 regarding a parallel hybrid configuration, the combination of a downsized engine with an electric propulsion system into a minimal hybrid electric vehicle results in a better utilisation of the engine, which improves fuel consumption. Furthermore, the electric motor and battery can compensate for reduction in the engine size.

In typical configurations, the combination of the two types of propulsion systems (internal combustion and electric) is usually characterised as either series or parallel hybrid systems. In a pure series hybrid propulsion system, only the electric motor(s) are in direct connection with the drive train and the engine is used to generate electricity which is fed to the electric motor(s). The advantage of this type of system is that the engine can be controlled independently of driving conditions and can therefore be consistently run in its optimum efficiency and low emission ranges. A key disadvantage to the series arrangement is the loss in energy experienced because of the inefficiencies associated with full conversion of the engine output to electricity.

In a pure parallel hybrid propulsion system, both the engine and the electric motor(s) are directly connected to the drive train and either one may independently drive the vehicle. Because there is a direct mechanical connection between the engine and the drive train in a parallel hybrid propulsion system, less energy is lost through conversion to electricity compared to a series hybrid propulsion system. The operating point for the engine, however, can not always be chosen with full freedom.

The two hybrid propulsion systems can be combined into either a switching hybrid propulsion system or a power-split hybrid propulsion system. A switching hybrid propulsion system typically includes an engine, a generator, a motor and a clutch. The engine is typically connected to the generator. The generator is connected through a clutch to the drive train. The motor is connected to the drive train between the clutch and the drive train. The clutch can be operated to allow series or parallel hybrid propulsion.

A power-split hybrid system, as is exemplarily employed with respect to the present invention, includes an engine, a generator and a motor. The engine output is "split" by a planetary gear set into a series path from the engine to the generator and a parallel path from the engine directly to the power train. In a power-split hybrid system, the engine speed can be controlled by varying the power split to the generator by way of the series path, while maintaining the mechanical connection between the engine and drive train through the parallel path. The motor augments the engine on the parallel path in a similar manner as a traction motor in a pure parallel hybrid propulsion system, and provides an opportunity to use energy directly through the series path, thereby reducing the losses associated with converting the electrical energy into, and out of chemical energy at the battery.

In a typical power-split hybrid system, the generator is usually connected to the sun gear of the planetary gear set. The engine is connected to the planetary carrier and the output gears (usually including an output shaft and gears for interconnection with the motor and the wheel-powering, final drive train) are connected to the ring gear. In such a configuration, the power-split hybrid system can generally be operated in four different modes; one electric mode and three hybrid modes.

In the electric mode, the power-split hybrid system propels the vehicle utilising only stored electrical energy and the engine is turned off. The tractive torque is supplied from the motor, the generator, or a combination of both. This is the preferred mode when the desired power is low enough that it can be produced more efficiently by the electrical system than by the engine and when the battery is sufficiently charged. This is also a preferred mode for reverse driving because the engine cannot provide reverse torque to the power train in this configuration.

In the parallel hybrid mode, the engine is operating and the generator is locked. By doing this, a fixed relationship between the speed of the engine and the vehicle speed is established. The motor operates as either a motor to provide tractive torque to supplement the engine's power, or can be operated to produce electricity as a generator. This is a preferred mode whenever the required power demand requires engine operation and the required driving power is approximately equal to an optimised operating condition of the engine. This mode is especially suitable for cruising speeds exclusively maintainable by the small internal combustion engine fitted to the hybrid electric vehicle.

In a positive split hybrid mode, the engine is on and its power is split between a direct mechanical path to the drive train and an electrical path through the generator. The engine speed in this mode is typically higher than the engine speed in the parallel mode, thus deriving higher engine power. The electrical energy produced by the generator can flow to the battery for storage or to the motor for immediate utilisation. In the positive split mode, the motor can be operated as either a motor to provide tractive torque to supplement the engine's power or to produce electricity together with the generator. This is the preferred mode whenever high engine power is required for tractive powering of the vehicle, such as when high magnitude acceleration is called for, as in passing or uphill ascents. This is also a preferred mode when the battery is charging.

In a negative split hybrid mode, the engine is in operation and the generator is being used as a motor against the engine to reduce its speed. Consequently, engine speed, and therefore engine power, are lower than in parallel mode. If needed, the motor can also be operated to provide tractive torque to the drive train or to generate electricity therefrom. This mode is typically never preferred due to increased losses at the generator and planetary gear system, but will be utilised when engine power is required to be decreased below that which would otherwise be produced in parallel mode. This situation will typically be brought about because the battery is in a well charged condition and/or there is low tractive power demand. In this regard, whether operating as a generator or motor, the toque output of the generator is always of the same sense (+/-); that is, having a torque that is always directionally opposed to that of the engine. The sign of the speed of the generator, however, alternates between negative and positive values depending upon the direction of rotation of its rotary shaft, which corresponds with generator vs. motor modes. Because power is dependent upon the sense of the speed (torque remains of the same sense), the power will be considered to be positive when the generator is acting as a generator and negative when the generator is acting as a motor.

When desiring to slow the speed of the engine, the current being supplied to the generator is changed causing the speed of the generator to slow. Through the planetary gear set, this in turn slows the engine. This effect is accomplished because the resistive force acting against the torque of the generator is less at the engine than at the drive shaft which is connected to the wheels and is being influenced by the entire mass of the vehicle. It should be appreciated that the change in speed of the generator is not equal, but instead proportional to that of the engine because of gearing ratios involved within the connection therebetween.

In electric and hybrid electric vehicles, large capacity electricity storage device(s), usually in the form of battery packs, are required. By conventional design, these batteries include a plurality of cylindrical battery cells that are collectively utilised to obtain sufficient performance and range in the vehicle. Typically, batteries are positioned within the vehicle in a compartment configured to protect against damage and to prevent the cells, and mostly their acidic contents, from causing injury or damage, especially in the event of a crash.

Typically, to achieve a smooth engine start in a hybrid electric vehicle in which the engine is mechanically interconnected with the drive wheels, the start of engine fuel injection and ignition are made at revolutionary speeds above any mechanical resonance speeds of the drive train. Additionally, at full take-off acceleration, any delay in the engine's production of power typically decreases engine performance. Still further, to achieve smooth driving characteristics and obtain low fuel consumption, the engine torque and speed change rates must be limited. At full take-off, this usually results in an increased time period for the engine to reach maximum power, and all of these conditions deteriorate acceleration performance of the vehicle.

It is well known that the battery state-of-charge (SOC) in a hybrid electric vehicle is typically controlled using SOC feedback control. When applying SOC feedback control, however, and when the vehicle is operating in a low velocity region, the SOC feedback control tends to grow unstable as velocity increases. Instability also occurs when the vehicle is operating at high velocity and the velocity of the vehicle then decreases. The same instability or weakness can still occur even when using "feed-forward" type estimating of required tractive force, the same being a typical complement to SOC feedback control.

This is particularly true at low vehicle velocities with velocity increases and at high vehicle velocities with velocity decreases. Even when properly designed, the SOC feedback control can be weak at full take-off. This is a real disadvantage to the smooth operation of the vehicle.

It is an object of this invention to improved the take off refinement of a hybrid vehicle.

According to a first aspect of the invention there is provided a method for minimising driver perceptible drive train disturbances during take-off in a hybrid electric vehicle the method comprising sensing an actual state of charge value of a battery in a hybrid electric vehicle and the velocity at which the vehicle is travelling during take-off operation, comparing the sensed actual state of charge value with a state of charge reference value and computing a delta state of charge value as a difference therebetween, looking up a velocity-based state of charge calibration factor corresponding to the velocity of the vehicle, utilising a combination of the delta state of charge value and the state of charge calibration factor as a state of charge feedback engine speed control instruction to an engine controller of the hybrid electric vehicle, sensing a driver's desired vehicular acceleration based on accelerator position, determining the maximum possible engine power that can be generated by the engine at the sensed vehicle speed, determining a required power value from the power train of the vehicle to meet the driver's desired vehicular acceleration, comparing the maximum possible engine power that can be generated at the sensed vehicle speed with the required power value and computing a delta power train requirement value as a difference therebetween, looking up a velocity-based and accelerator position-based power calibration factor corresponding to the travelling velocity of the vehicle and the accelerator position and utilising a combination of the delta power train requirement value and the power calibration factor as a power requirement feed-forward engine speed control instruction to an engine controller of the hybrid electric vehicle.

The combination of the delta state of charge value and the state of charge calibration factor may be obtained by multiplying the delta state of charge value by the state of charge calibration factor.

The combination of the delta power train requirement value and the power calibration factor may be obtained by multiplying the delta power train requirement value by the power calibration factor.

The method may further comprise detecting a take-off vehicle operating condition in which maximised power is likely to be demanded from the drive train of the hybrid electric vehicle and preventing a sensed state of charge discharge condition during the take-off operation due to motor utilisation of battery power from triggering a battery charge condition which reduces engine torque available to power the drive train of the vehicle.

The method may further comprise detecting a take-off vehicle operating condition in which maximised power is likely to be demanded from the drive train of the hybrid electric vehicle and causing immediate acceleration of the engine beyond an optimised operational speed in anticipation of an actual maximised power demand.

The method may further comprise detecting a take-off vehicle operating condition in which maximised power is likely to be demanded from the drive train of the hybrid electric vehicle and causing a command to be issued from a generator controller, responsive to a sensed state of charge discharge condition, to instruct immediate acceleration of the engine beyond an optimised operational speed thereby minimising discharge of the battery.

The state of charge reference value may be in the range of forty to sixty percent of battery total charge capacity.

According to a second aspect of the invention there is provided a hybrid electric vehicle having an internal combustion engine, an engine controller, an electric motor, an electric generator, a battery and a central electronic controller to manage the operation of the engine, electric motor and electric generator wherein the central electronic controller is arranged and programmed to minimising driver perceptible drive train disturbances during take-off in a hybrid electric vehicle by sensing an actual state-of-charge value of the battery and the velocity at which the vehicle is travelling during take-off operation, comparing the sensed actual state of charge value with a state of charge reference value and computing a delta state of charge value as a difference therebetween, looking up from a look up chart a velocity-based state of charge calibration factor corresponding to the travelling velocity of the vehicle, sending a state of charge feedback engine speed control signal based upon a combination of the delta state of charge value and the state of charge calibration factor to the engine controller, sensing a driver's desired vehicular acceleration based on accelerator position, determining maximum possible engine power available from the engine at the sensed vehicle speed, determining a required power value from the power train of the vehicle to meet the driver's desired vehicular acceleration, comparing the maximum possible engine power available at the sensed vehicle speed with the required power value and computing a delta power train requirement value as a difference therebetween, looking up a velocity-based and accelerator position-based power calibration factor corresponding to the velocity of the vehicle and the accelerator position and utilising a combination of the delta power train requirement value and the power calibration factor as a power requirement feed-forward engine speed control instruction to the engine controller.

The invention will now be described by way of example with reference to the accompanying drawing of which:-
In the following, the invention will be described in greater detail by way of examples and with reference to the attached drawings, in which:
   Figure 1 is a graphical comparison of torque generated by a parallel hybrid and systems that have either an engine or motor;
   Figure 2 is a perspective of a hybrid electric vehicle showing system component locations on the vehicle;
   Figure 3 is a schematic depicting the architecture of a power-split hybrid electric vehicle;
   Figure 4 is a cross-sectional schematic representation of a planetary gear set;
   Figure 5 is a simplified schematic view of a one-way clutch shown in Figure 2;
   Figure 6 is a schematic depicting control relationships between the various systems of a hybrid electric vehicle as coordinated utilising a controller area network;
   Figure 7 is a functional schematic depicting the processes, tasks and controls of the various systems of the hybrid electric vehicle;
   Figure 8a is a schematic horizontal cross-sectional view of a battery for a hybrid electric vehicle;
   Figure 8b is a schematic horizontal cross-sectional view of a traditional battery having cylindrically-shaped cells;
   Figure 8c is a schematic vertical cross-sectional view of a battery cooling system as depicted in Figure 8a;
   Figures 9 and 10 schematically illustrate a method for minimising driver perceptible drive train disturbances during take-off in a hybrid electric vehicle in accordance with this invention;

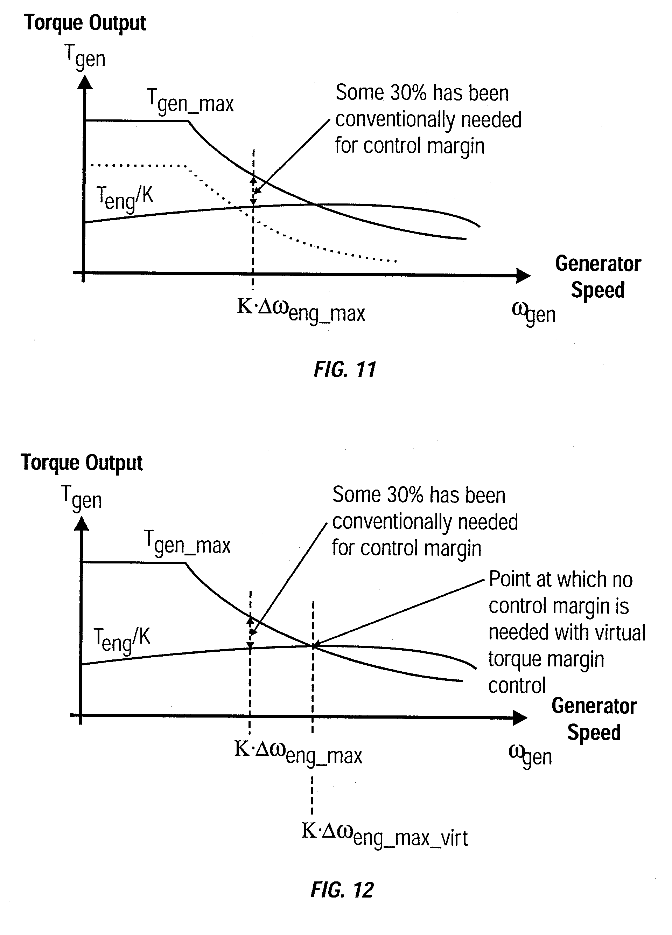

   Figures 11 through 15 schematically illustrate a method for maximising the utilisable torque output of a particularly sized engine in a hybrid electric vehicle.

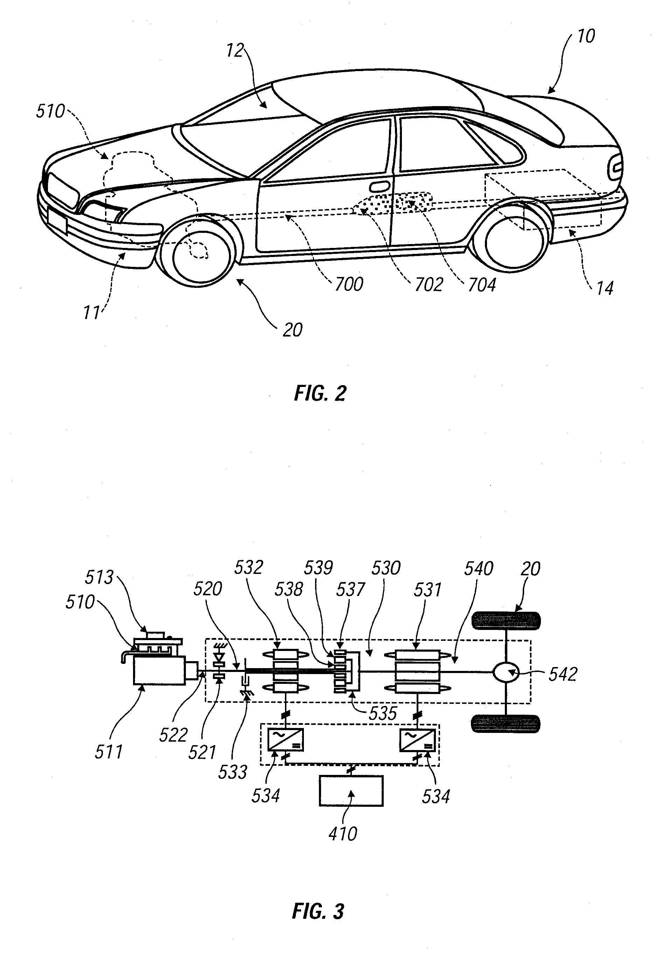

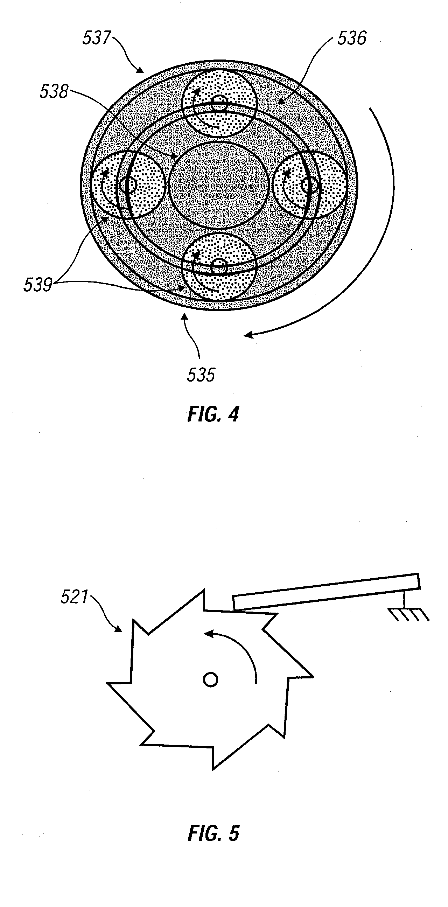

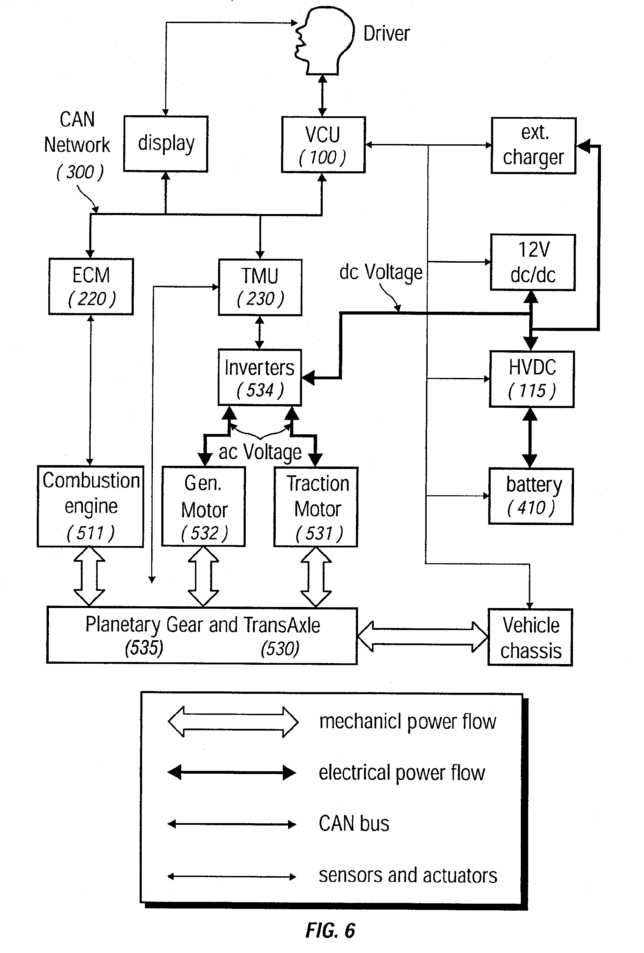

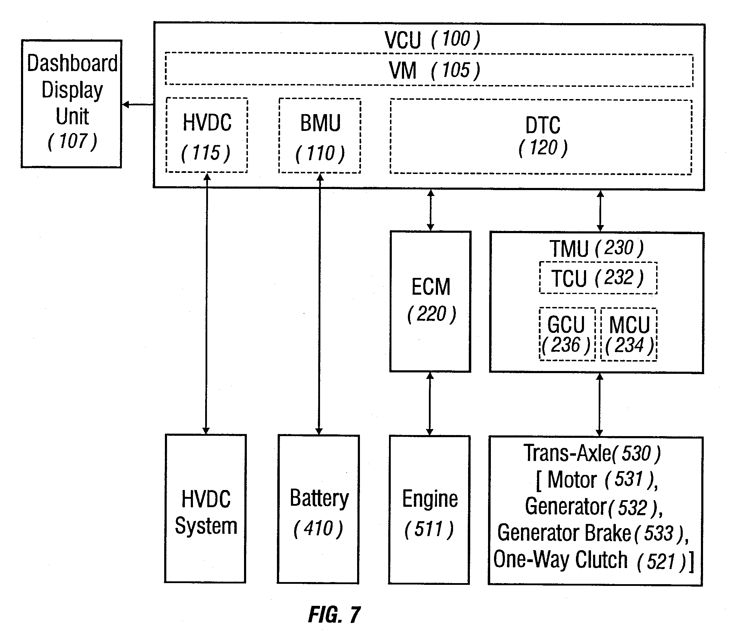

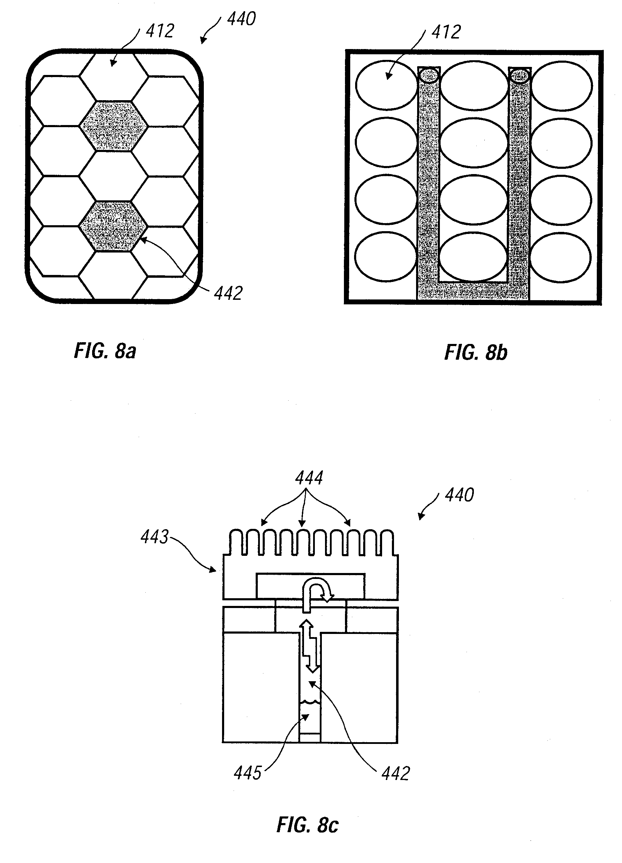

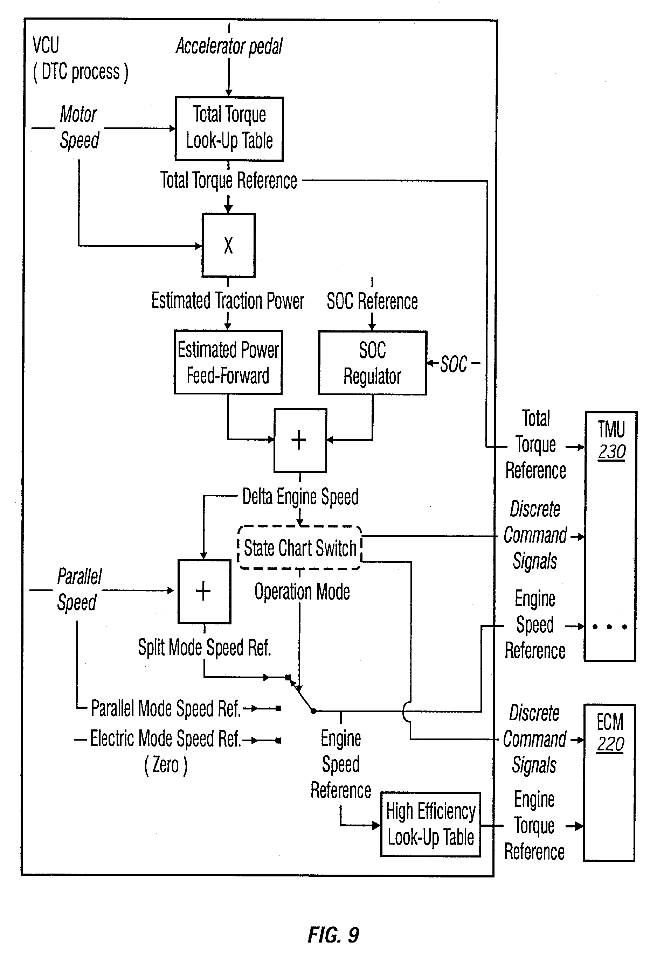

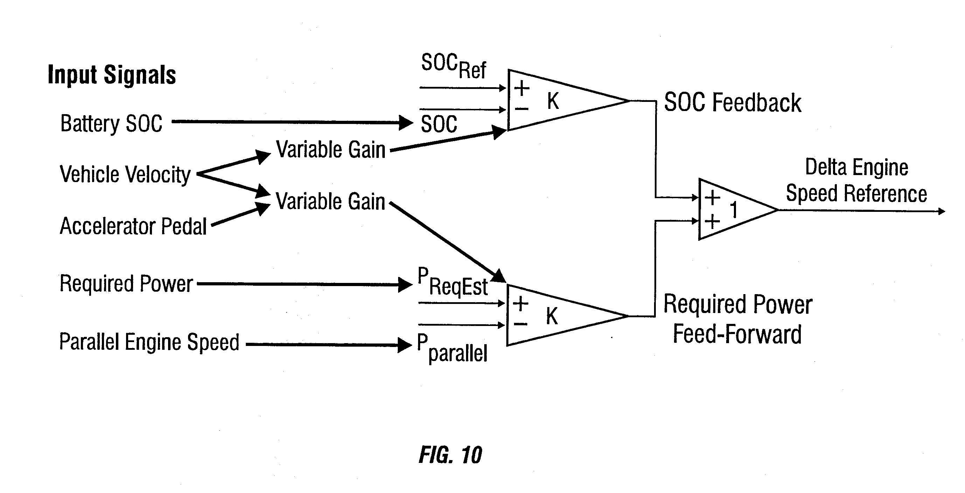

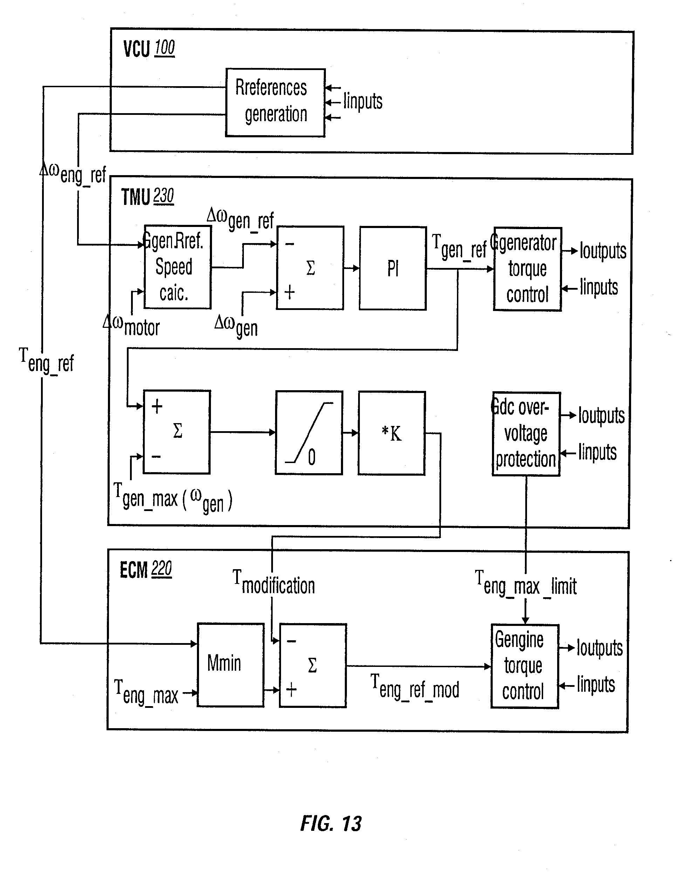

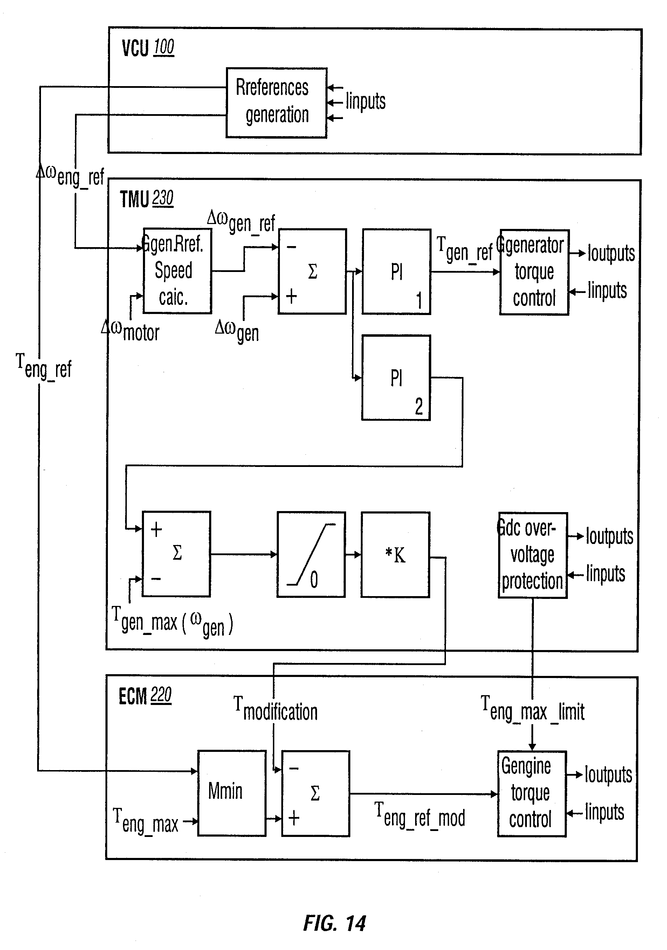

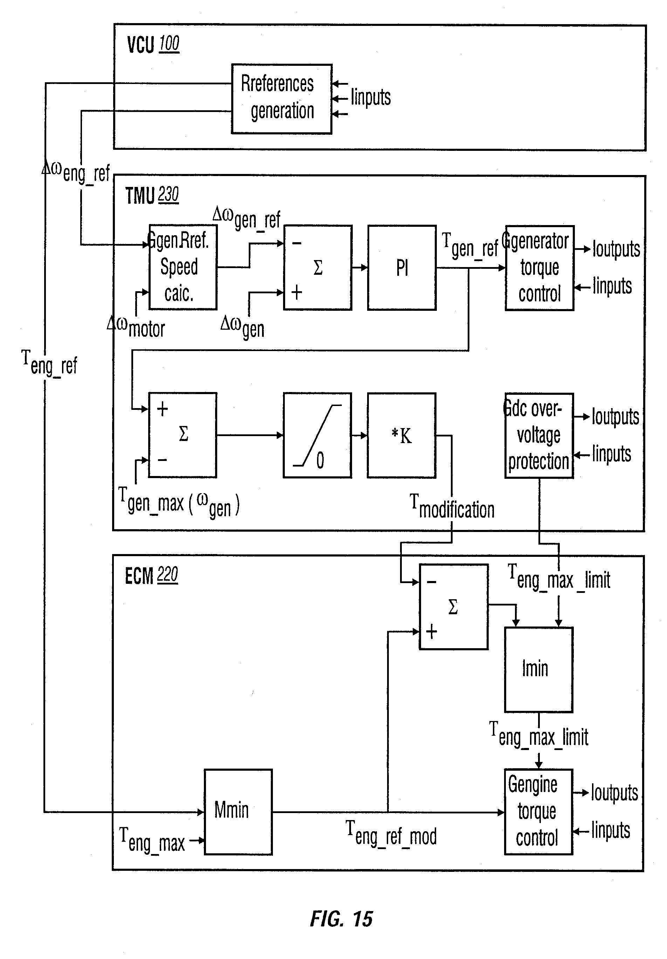

   With reference to Figures 1 and 2 there is shown a hybrid electric vehicle 10 with a power train system having components generally designated with reference numbers from the 500's series included therein for providing propulsion, as well as serving supplemental functions which are described in greater detail herein.
   Predominantly, the power train system is positioned in an engine room 11 located near a passenger compartment 12 of the vehicle 10. A battery compartment or housing 14, also positioned near the passenger compartment 12 holds one or more batteries 410. As will be appreciated by those skilled in the art, the positioning of both the engine room 11 and battery housing 14 is not limited to the locations set forth in Figure 2. For example, either may be positioned in front of, or behind the passenger compartment 12.
   As depicted in Figure 2, the overall systems architecture of the electric hybrid vehicle 10 comprises an engine system 510, including an internal combustion engine 511 that is mechanically connected by an output shaft system 520 to a transaxle system 530.
   The transaxle system 530 is further connected to a drive shaft system 540 utilised to rotate one or more drive wheels 20 that propel the hybrid electric transporting vehicle 10.
   The combustion engine 511 is controlled by an engine control module (ECM) or unit 220 which is capable of adjusting, among possible parameters, airflow to, fuel flow to and/or ignition at the engine 511. The engine 511 is mechanically connected via an output shaft 522 to the transaxle system 530. A planetary gear set 535 establishes interconnection between the engine 511 via the output shaft 522, a generator 532, and the drive shaft system 540 via the transaxle system 530.
   A motor 531 is also coupled to the drive shaft system 540 via the transaxle system 530.
   As shown in Figures 3 and 5, a one way clutch 521 is engageable with the output shaft 522, which in turn is connect to the engine 511 and to the planetary gear set 535.
   The function of the one-way clutch 521 is to limit the engine to being only a power/torque input to the planetary gear set 535, and with only one direction of rotation. Consequently, the one-way clutch 521 prevents power or torque from being transmitted from the planetary gear set 535 back to the engine 511.
   Alternatively and as shown in Figure 4, the planetary gear set 535 comprises a plurality of concentrically positioned planet gears 539 mechanically engaged between a perimeter region of a centrally located sun gear 538 and an interior surface of a ring gear 537. The individual gears that make up the plurality or set of planet gears 539 are fixed in positions relative to each other by a planetary carrier 536.
   The generator 532 is mechanically connected to the sun gear 538 and is configured to convey rotational power and torque to and from the planetary gear set 535. In a preferred embodiment, the generator 532 is capable of being locked to prevent rotation of the sun gear 538 by a generator brake or lock-up device 533. The motor 531 is mechanically connected to the ring gear 537 and is configured to convey rotational power and torque to and from the planetary gear set 535. In a preferred embodiment, and as schematically shown in Figure 3, the drive shaft system 540 is engageable with the motor 531 and effectively terminates at the drive wheel 20, via what can be a conventionally configured transmission/differential arrangement 542.
   Based on the above disclosed system architecture, implementation of an energy management strategy, which is a focus of the hybrid electric vehicle 10, starts at a high level within a vehicle control unit or vehicle systems controller (VCU)100 as schematically shown in Figures 6 and 7. The vehicle systems controller 100 is programmed with control strategies for the drive train system and battery system, as well as others. The vehicle systems controller 100 is responsible for interpreting driver inputs, coordinating the component controllers, and determining vehicle system operating states. The VCU 100 also generates commands to appropriate component sub-systems based on defined vehicle systems controller 100 functions, and sends those commands to the component controllers that, based thereon, take appropriate actions. The vehicle systems controller 100 also acts as a reference signal generator for the sub-system controllers.
   The vehicle systems controller 100 may take the form of a single, integrated microprocessor, or comprise multiple microprocessors that are suitably interconnected and coordinated.
   A primary function of the vehicle systems controller 100 is to carry out vehicle mode processes and tasks (also known as the sequential control process), as well as make torque determinations, set reference values and perform energy management processes. Certain systems of the vehicle 10 are managed or monitored by a vehicle management (VM) unit or controller 105 which carries out sequential control processes, including ascertaining the position of the vehicle key and gear selector positioning, among others. It is at this level that certain inputs from the driver and conditions of the vehicle are synthesised for utilisation as command inputs for sub-system controllers.
   At the lower level of the VCU 100, three sub-component controllers are illustrated in Figure 7. The first is a high voltage DC controller (HVDC) 115; the second is a battery management unit or controller 110 (BMU); and the third is a drive train controller 120 (DTC). As indicated above, certain inputs and processes are taken from the driver and the vehicle's systems at the vehicle management unit 105. Conversely, certain outputs relevant to the driver will be transmitted and displayed at the dashboard display unit 107 from the VCU 100 or the VM 105.
   The HVDC 115 is responsible for coordinating operation of the high voltage components. The positioning of this controller is schematically shown in Figure 6. The HVDC contains contactors or breakers which are normally positioned to an open configuration that prevents electricity from flowing across. But when called on to take action and engage the battery 410, for instance when starting of the engine 511 is required, these contractors (usually a pair) close completing an appropriate connective circuit.
   As shown in Figure 6, the HVDC serves as a shield or buffer between the high voltage battery 410, and the inverters 534, as well as other auxiliary loads run off of the electric power of the battery 410. An example of such a high voltage auxiliary load may include an electrically run air-conditioning compressor system. In order to act as such a buffer, the high voltage output from the battery 410 must be relatively slowly "brought-up" to operating levels at the inverter 534 and/or auxiliary loads. In order to accept this "run-up" of the voltage, relatively small capacity contactors are initially closed that cause voltage from the battery to pass to a capacitor in either the inverter 534 or the appropriate auxiliary load, across a resistive circuit (a circuit containing buffering resistors). Once an appropriate pre-charge is built-up in the capacitor, primary contractors are then closed which complete the high voltage circuit between the batteries 410 and the capacitor contained within the receiving component which may be exemplified by the DC to AC inverter(s) 534, or an auxiliary load such as an electric air-conditioning system as indicated hereinabove. In this manner, a potentially damaging high voltage is prevented from being introduced too quickly to the receiving components.
   The HVDC 115 also carries out certain diagnostic functions regarding the components of the HVDC 115, such as the contactors within the HVDC 115 itself, and also possibly the several systems interconnected through the HVDC, such as the battery 410, the inverters 534, or an electrically driven air-conditioning compressor which has not been illustrated in the Figures. Among other parameters, these diagnostics may be performed based on measurements of voltage and/or current.
   The HVDC 115 also provides interconnection between an exterior charger connection, shown as ext. charger in Figure 6, thereby allowing the battery 410 to be "plugged-in" for charging from an external power source.
   The battery management controller (BMU) 110 handles control tasks relative to the battery system 410. Among other characteristics, the BMU 110 can estimate and measure state-of-charge (SOC) levels, and voltage and current parameters. It can also sense/determine and maintain maximum and minimum voltage and current levels with respect to the battery 410. Based on these determinations or sensed quantities/qualities, the VM 105 , via such control modules as the DTC 120, can direct certain operations for affecting changes in the SOC of the battery 410. Other characteristics which may be monitored include operating temperature of the battery 410, and voltages at the individual battery cells 412. Similarly, pressure within the cells 412 can also be monitored. Failures may be detected and reported, at least back to the VCU but there is also the possibility of the information being passed to the operator via the dashboard display unit 107.
   The DTC 120 makes the mode selection under which the several powering components will cooperate. That includes choices between parallel and split modes, as well as positive and negative split modes. The operational points for the several components of the drive train are also specified by the DTC 120. Still further, reference values are provided by the DTC 120 for the several sub-sytems, including the transaxle management control modules or unit (TMU) 230 and the engine control module or unit (ECM) 220. From among the possible settings established by the DTC 120, battery charging/discharging mode is a possibility, as well as specifying whether the generator 532 and/or motor 531 should be used in their powering capacity as a motor, or their generating capacity as a generator. Torque references for the generator and motor are also issued from the TMU 230.
   As a sub-component under the TMU 230, the transaxle control unit TCU 232 handles the transaxle 530 with respect to torque compensation when starting and stopping the engine 511. The TCU 232 uses and controls two slave processors characterised as a generator control unit GCU 236 and a motor control unit MCU 234. The GCU 236 handles the current and torque control of the generator 532; typically, via the inverter 534. The GCU 236 receives its torque and speed reference information from the TCU 232 as its immediate controller. The TCU 232 receives a total torque reference for the transaxle 530 and the speed reference value for the engine 511, together with mode reference information regarding cooperation between the engine 511 and generator 532; such as, whether parallel-, positive-split, or negative-split mode configurations will be assumed. The TCU 232 generates the torque reference parameters for the generator 532 and motor 531, each of which are implemented under the control of the GCU 236 and MCU 234, respectively. The specified torque settings are accomplished by controlling the current provided to the respective generator/motor controllers 236,234.
   Based on a map of optimal engine torque vs. speed curves, engine speed and torque are selected by the DTC 120 so that the engine system 510 can deliver the desired engine power and simultaneously lie on one of the engine's optimised efficient curves. If the DTC 120 determines that the speed of the engine 511 is too low for efficient operation, then the engine 511 is turned or left off by the engine control unit 220. If the power train control module 120 determines that the speed of the engine 511 is too high to be controlled by the generator 532 based on SOC and generator limitations, the engine 511 is set to a slowed operational speed by the ECM 220.
   Once the speed, torque and power of the engine 511 are determined by the vehicle systems controller 100, particularly at the DTC120 of the controller 100, then the DTC 120 further determines the required speed and torque of the generator 532 to control the engine 511. The DTC 120, using this information, then determines the required speed and torque of the motor 531 to meet the difference, if any, between driver power or torque demand and the engine power or torque.
   Torque determination and monitoring is also carried out at the VCU 100. This function further ensures that torque delivered to the drive wheels 20 is substantially equal to the torque or acceleration demanded by the driver. The VCU 100 also monitors and controls the torque from the engine 511 and transaxle system 530 by comparing a sensed torque against the torque demanded by the driver. Torque management by the VCU 100 interprets driver inputs and speed control demands to determine regenerative brake torque and desired output shaft torque.
   From the VCU 100, commands and references are distributed over a controller area network (CAN) 300 to component controllers generally referenced herein utilising reference numbers in the 200's series. As indicated above, these controllers include the ECM 220 and the TMU 230 that together control the power train system to achieve efficient energy management, partition torque, determine engine 511 operating point(s), and decide on, and coordinate engine 511 start/stops. Commands and references from the VCU 100 to a series regenerative brake controller determine regeneration torque limitations, desired regenerative torque and zero vehicle speed control.
   Finally, if and/or when individual system components are rendered inoperative, such as the motor 531 becomes disabled, the VCU 100 is configured to provide limited operating control over the power train system to allow the hybrid engine vehicle 10 to "limp" home.
   As shown in Figure 8a, a compact battery system 400 is made up of a number of elongate battery cells 412, each cell 412 having a longitudinal axis and a hexagonal cross-section shape in a plane oriented substantially perpendicular to the longitudinal axis. The plurality of cells 412 are arranged in a honeycomb configuration with opposed faces of adjacent cells 412 proximately located one to the other in face-to-face relationship. One or more hexagonally shaped cooling channels 442 is located at interior locations amongst the plurality of battery cells 412.
   As is shown in Figure 8c, a thermally radiating cap 443 is in fluid communication with one or more of the cooling channels 442 which is filled with a cooling fluid 445 that circulates between the cap 443 and the channels 442 to cool the battery cells 412. The cooling fluid 445 may consist of water maintained under a vacuum so that it boils at approximately 40° centigrade. Circulation of the fluid, as well as transformation between the gaseous and liquid states, occurs because of the temperature differential between the warmer lower area among the battery cells 412 and the cooler upper area with the cap 443.
   To further promote cooling, the radiating cap 443 has a plurality of fin-type members 444 that extend from an exteriorly exposed surface thereof for enhancing thermal discharge of heat from the cap 443 to air circulated across the fins 444.
   In order to maximise the contribution of the power of the engine 511 to a hybrid electric vehicle's 10 performance in a take-off operating condition a method is used which includes initiating take-off acceleration of the vehicle 10 exclusively using the motor 531, predicting the future demand for an engine's 511 power contribution to the vehicle's 10 immediate future power demand during the take-off acceleration, and starting the engine 511 at the time that the determination is made of future demand for the engine's 511 power contribution during the take-off acceleration. This full take-off control method or process further includes making the prediction of future demand at the initiation of take-off acceleration and/or increasing the speed of engine 511 operation as rapidly as predetermined operating efficiency parameters permit. The full take-off control method which increases the speed of engine 511 operation as rapidly as predetermined operating efficiency parameters permit may also include a step of allowing the increase in speed of engine operation to progress to a predetermined peak efficiency rate and diverting excess power from the engine 511 to the generator 532 that generates electricity with the diverted power.
   This full take-off control method which increases the speed of the engine 511 operation as rapidly as predetermined operating efficiency parameters permit, may also include a step of allowing the increase in speed of engine 511 operation to progress to a predetermined peak efficiency rate which enables exclusive utilisation of the engine 511 to meet the entirety of the vehicle's 10 future power demand and reducing the motor's 531 contribution to the power supplied to the vehicle 10 so that no excess power above demand is supplied by the engine 511.
   The vehicle is also provided with a method for maintaining a catalyst 702 of an emissions system 700 in an operative state. The method predicts a time period after which the catalyst 702 will cool down below a temperature known as a light-off temperature at which the catalyst becomes ineffective. The engine 511 is restarted when the time period has expired or lapsed, thereby maintaining the catalyst 702 at temperatures in excess of the light-off temperature, regardless of whether power is need from the engine 511 at that time.
   The feature of the vehicle 10 which is the primary subject of this invention is a method for minimising driver perceptible drive train disturbances during take-off driving in a hybrid electric vehicle 10 when maximised power is often desired is also described herein. The concepts of this method are specifically illustrated in Figures 9 and 10.
   The method includes sensing an actual state-of-charge (SOC) value of the battery 410 in a hybrid electric vehicle 10 and a travelling velocity of the vehicle 10 during take-off operation. The sensed actual SOC value is compared with a SOC reference value and a delta SOC value is computed as a difference therebetween. A velocity-based SOC calibration factor corresponding to the travelling velocity of the vehicle 10 is obtained from a look- up table maintained in the control system. A combination of the delta SOC value and the SOC calibration factor are utilised as a SOC feedback engine speed control instruction to the engine control unit (ECM) 220 of the hybrid electric vehicle 10. A driver's desired vehicular acceleration based on accelerator position is also sensed. A maximum possible engine power generatable at the sensed vehicle speed is determined, as is a required power value from the power train of the vehicle to meet the driver's desired vehicular acceleration. The maximum possible engine power generatable at the sensed vehicle speed is compared with the required power value and a delta power train requirement value is computed as a difference therebetween. A velocity-based and accelerator position-based power calibration factor corresponding to the travelling velocity of the vehicle and the accelerator position is determined from a second look-up table. A combination of the delta power train requirement value and the power calibration factor is utilised as a power requirement feed-forward engine speed control instruction to the engine controller 220 of the hybrid electric vehicle 10.
   The combination of the delta SOC value and the SOC calibration factor is by multiplication, as is the combination of the delta power train requirement value and the power calibration factor is by multiplication.
   When a take-off vehicle operating condition is detected in which maximised power is likely to be demanded from the drive train of the hybrid electric vehicle 10 then a sensed SOC discharge condition during the take-off operation due to motor utilisation of battery power is prevented from triggering a battery charging condition which would reduce engine torque available to power the drive train of the vehicle 10.
   Alternatively, and/or additionally, immediate acceleration of the engine's 511 operation beyond an optimised operational speed in anticipation of an actual maximised power demand is initiated.
   Still further, a command may be issued from a generator controller (GCU) 236, responsive to a sensed SOC discharge condition, instructing immediate acceleration of the engine's 511 operation beyond an optimised operational speed thereby minimising discharge of the battery 410 or commencing recharge of the battery 410.
   The SOC reference value used is normally within the range of forty to sixty percent of battery total charge capacity and in one specific use fifty percent of battery 410 total charge capacity is utilised.
   It will be appreciated that the above method is performed by means of the use of an electronic controller 100 which is programmed to carry out the necessary steps and stores the necessary data in the form of look up tables and is connected to various sensors and other controllers located on the vehicle.
   The vehicle also includes a method for optimising the operational efficiency of a hybrid electric vehicle 10. The method includes operating an engine 511 of a hybrid electric vehicle 10 preferentially on an optimised power curve of the engine 511 for maximising the efficiency of the engine 511. A state-of-charge (SOC) condition of a battery 410 of the hybrid electric vehicle 10 is sensed and constitutes a preferential value indicative of no additional charging being desired. At cruising, however, the engine power output in parallel mode is too large along the optimised power curve of the engine 511, particularly in view of gear ratios set by acceleration requirements. Instead of using negative-split mode and suffering the inherent losses of that configuration, the running torque of the engine 511 in parallel mode is reduced to a level below the optimised torque curve to a point that the power produced by the engine 511 is substantially equal to the power demanded for driving the hybrid electric vehicle 10.
   The vehicle also includes a method for calibrating and synchronising sensed operating torques of the engine 511 and the generator 532 in a planetary gear based hybrid electric vehicle 10. The method includes providing a sensor that detects the operational torque of the engine 511 at the engine's interface with the planetary gear system 535 (power-split hybrid drive train) of the hybrid electric vehicle 10. A sensor is provided that detects the operational torque of the generator 532 at its interface with the planetary gear system 535 of the hybrid electric vehicle 10. The planetary gear system 535 of the hybrid electric vehicle 10 is operated in the split mode so that the generator 532 is directly linked to the engine 511 and a reading of the sensor that detects the operational torque of the generator 532 may also be used to compute the operating torque of the engine 511. Paired values of sensed operational speeds of the engine 511 and the generator 532 at like times are recorded. Each pair of recorded values is arithmetically processed and a calibrating value therebetween is computed. The sensing and recording of paired values at the same sensed generator and engine operation points is repeated thereby enabling the calculation of computed average calibrating values at each of the particular sensed generator and engine speeds and torques suitable for subsequent utilisation in computing correlating engine torques in the future. The engine 511 and the generator 532 are controlled utilising the average calibrating value at future times of transition between power-split mode and parallel mode of the planetary gear system 535 so that the engine torque is substantially matched with the generator torque at the time of direct linkage across the planetary gear arrangement (i.e., when releasing generator lock-up), thereby avoiding driver detectible irregularities or harshness in the performance of the power train of the hybrid electric vehicle 10.
   The vehicle is also provided with a method for maximising the utilisable torque output capacity of a hybrid electric vehicle 10. The method includes controlling operation of the engine 511 of the hybrid electric vehicle 10 using the generator 532, the engine 511 and generator 532 being interconnected through the planetary gear system 535. The generator 532 has approximately equal torque output capacity as the engine 511 when connecting gear ratios are considered.
   An engine controller 220 is utilised for managing the engine's 511 operation thereby permitting the engine 511 to be operated at a torque output level substantially equal to the maximum torque output of the generator 532 without a significant margin of excess control capacity of the generator 532 over the engine 511. An overpower condition is detected in which the torque output of the engine 511 is surpassing the maximum torque output of the generator 532. Responsively, the engine 511 is controlled to a torque output that is less than the maximum torque output of the generator 532.
   The method continues by rechecking for a continuation of the engine overpower condition and shutting the engine 511 down if the control actions are not sufficient and a continuing overpower condition is detected. In this manner, generator and engine over-speed is avoided.
   By this process, total utilisable capacity of the hybrid electric vehicle's power plant is optimised by enabling running the engine 511 at substantially maximum capacity where greatest torque is produced therefrom.
   With reference to Figures 13-15, the VCU 100 calculates an engine reference value (ueng_ref) and the TMU 230 receives that value and, together with a sensed speed of the motor (ùmotor), taking into account the gearing ratio consequence, a generator reference speed (ùgen_ref) is calculated and passed forward for comparison, by summation, with the actual generator speed (ùgen). The result of that comparison is then processed through a proportional integral controller (PI) for, among other things, amplifying the error value and "learning" error patterns that continue over periods of time based on historical values. The learning process is enabled by performing repetitive calculations.
   From the PI controller, a generator torque reference (Tgen_ref) is derived. This reference is passed to the generator torque controller 236 for operational control purposes; i.e., by adjusting current, by adjusting voltage with is accomplished using pulse width modulation using transistors in the inverter (see Figure 6). The same reference (Tgen_ref) is further processed by subtracting therefrom the maximum torque capacity of the generator (Tgen_max(ùgen)). The sense, whether positive or negative, of this outcome is then determined; if negative, the maximum torque capacity of the generator has not been exceeded; if positive, the maximum torque capacity of the generator has been exceeded. If positive, the capacity of the generator is being exceeded. This positive value is then multiplied by the constant K to take into account the effect of the gearing ratio and thereby calculating a modification torque (Tmodifictation).
   To the ECM 220, an engine torque reference (Teng_ref) is supplied from the VCM 100. At the ECM 220, the engine torque reference (Teng_ref) is compared to the maximum torque of the engine (Teng_max). The smaller (min) of these two values is further processed by comparison with the modification torque (Tmodifictation) which is subtracted therefrom producing a modified engine torque reference (Teng_ref_mod). This reference (Teng_ref_mod) is fed forward to the engine torque controller 220 for operational control purposes over the engine 511 such as for adjusting, among possible parameters, airflow to, fuel flow to and/or ignition at the engine 511. In practice, if the generator 532 has not been determined to be in a condition overpowering the engine 511 at the TMU 230, then the engine torque reference (Teng_ref) from the VCU 100 will be processed through to the engine 511. If, however, there is a torque modification value (Tmodifictation) from the TMU 230 that is not zero, the engine 511 will be controlled to eliminate the condition in which the engine torque exceeds that of the generator 532.
   Although the present invention has been described and illustrated in with respect to a specific embodiment it will be appreciated that modifications or alternative configurations could be utilised which fall within the scope of this invention as set out in the claims presented hereafter.

## Claims

1. A method for minimising driver perceptible drive train disturbances during take-off in a hybrid electric vehicle (10) having an engine (511) **characterised in that** the method comprises sensing an actual state of charge value of a battery (410) in a hybrid electric vehicle (10) and the velocity at which the vehicle (10) is travelling during take-off operation, comparing the sensed actual state of charge value with a state of charge reference value and computing a delta state of charge value as a difference therebetween, looking up a velocity-based state of charge calibration factor corresponding to the velocity of the vehicle (10), utilising a combination of the delta state of charge value and the state of charge calibration factor as a state of charge feedback engine speed control instruction to an engine controller (220) of the hybrid electric vehicle (10), sensing a driver's desired vehicular acceleration based on accelerator position, determining the maximum possible engine power that can be generated by the engine (511) at the sensed vehicle speed, determining a required power value from a power train of the vehicle (10) to meet the driver's desired vehicular acceleration, comparing the maximum possible engine power that can be generated at the sensed vehicle speed with the required power value and computing a delta power train requirement value as a difference therebetween, looking up a velocity-based and accelerator position-based power calibration factor corresponding to the travelling velocity of the vehicle and the accelerator position and utilising a combination of the delta power train requirement value and the power calibration factor as a power requirement feed-forward engine speed control instruction to the engine controller (220)of the hybrid electric vehicle(10).

2. A method as claimed in claim 1 wherein the combination of the delta state of charge value and the state of charge calibration factor is obtained by multiplying the delta state of charge value by the state of charge calibration factor.

3. A method as claimed in claim 1 or in claim 2 wherein the combination of the delta power train requirement value and the power calibration factor is obtained by multiplying the delta power train requirement value by the power calibration factor.

4. A method as claimed in any of claims 1 to 3 further comprising detecting a take-off vehicle operating condition in which maximised power is likely to be demanded from the drive train of the hybrid electric vehicle (10) and preventing a sensed state of charge discharge condition during the take-off operation due to motor utilisation of battery power from triggering a battery charge condition which reduces engine torque available to power the drive train of the vehicle (10).

5. A method as claimed in any of claims 1 to 4 further comprising detecting a take-off vehicle operating condition in which maximised power is likely to be demanded from the drive train of the hybrid electric vehicle (10) and causing immediate acceleration of the engine (511) beyond an optimised operational speed in anticipation of an actual maximised power demand.

6. A method as claimed in any of claims 1 to 5 further comprising detecting a take-off vehicle operating condition in which maximised power is likely to be demanded from the drive train of the hybrid electric vehicle (10) and causing a command to be issued from a generator controller (236), responsive to a sensed state of charge discharge condition, to instruct immediate acceleration of the engine beyond an optimised operational speed thereby minimising discharge of the battery (410).

7. A method as claimed in any of claims 1 to 6 wherein the state of charge reference value is in the range of forty to sixty percent of battery total charge capacity.

8. A hybrid electric vehicle having an internal combustion engine (511), an engine controller, an electric motor (531), an electric generator (532), a battery (410) and a central electronic controller (100) to manage the operation of the engine (511), electric motor and electric generator **characterised in that** the central electronic controller (100) is arranged and programmed to minimising driver perceptible drive train disturbances during take-off in a hybrid electric vehicle by sensing an actual state-of-charge value of the battery (410) and the velocity at which the vehicle (10) is travelling during take-off operation, comparing the sensed actual state of charge value with a state of charge reference value and computing a delta state of charge value as a difference therebetween, looking up from a look up chart a velocity-based state of charge calibration factor corresponding to the travelling velocity of the vehicle (10), sending a state of charge feedback engine speed control signal based upon a combination of the delta state of charge value and the state of charge calibration factor to the engine controller (220), sensing a driver's desired vehicular acceleration based on accelerator position, determining maximum possible engine power available from the engine (511) at the sensed vehicle speed, determining a required power value from the power train of the vehicle to meet the driver's desired vehicular acceleration, comparing the maximum possible engine power available at the sensed vehicle speed with the required power value and computing a delta power train requirement value as a difference therebetween, looking up a velocity-based and accelerator position-based power calibration factor corresponding to the velocity of the vehicle and the accelerator position and utilising a combination of the delta power train requirement value and the power calibration factor as a power requirement feed-forward engine speed control instruction to the engine controller (220).
